(19) **Europäisches Patentamt / European Patent Office / Office européen des brevets**

(11) **EP 2 237 979 B1**

(12) # EUROPÄISCHE PATENTSCHRIFT

(45) Veröffentlichungstag und Bekanntmachung des Hinweises auf die Patenterteilung:
**27.01.2016 Patentblatt 2016/04**

(21) Anmeldenummer: **08867541.8**

(22) Anmeldetag: **07.11.2008**

(51) Int Cl.:
**B60H 1/00** *(2006.01)*

(86) Internationale Anmeldenummer:
**PCT/EP2008/009397**

(87) Internationale Veröffentlichungsnummer:
**WO 2009/083064 (09.07.2009 Gazette 2009/28)**

(54) **SCHALLDÄMPFENDER FLUIDKANAL MIT EINEM STRÖMUNGSLEITELEMENT**

SOUND-DAMPENING FLUID CHANNEL HAVING A FLOW GUIDE ELEMENT

CANAL FLUIDIQUE INSONORISANT DOTÉ D'UN ÉLÉMENT DE GUIDAGE DE FLUX

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.12.2007 DE 102007062827**

(43) Veröffentlichungstag der Anmeldung:
**13.10.2010 Patentblatt 2010/41**

(73) Patentinhaber: **MAHLE Behr GmbH & Co. KG
70469 Stuttgart (DE)**

(72) Erfinder:
• **PAUL, Michael
  74343 Sachsenheim (DE)**
• **SPÄH, Moritz
  73525 Schwäbisch Gmünd (DE)**
• **DIEKSANDER, Wolfgang
  70839 Gerlingen (DE)**

• **KUZNIA, Thomas
  73732 Esslingen (DE)**
• **RENDEL, Michael
  71277 Rutesheim (DE)**
• **KRAFT, Thomas
  70736 Fellbach (DE)**
• **LINDAUER, Sascha
  73614 Schorndorf (DE)**

(74) Vertreter: **Grauel, Andreas
  Grauel IP
  Patentanwaltskanzlei
  Presselstraße 10
  70191 Stuttgart (DE)**

(56) Entgegenhaltungen:

EP-A- 1 469 258       EP-A- 1 630 486
EP-A- 1 997 656       WO-A-03/073016
DE-A1- 2 405 692      DE-A1-102006 014 683
US-A1- 2008 032 618

**Beschreibung**

Die Erfindung betrifft einen schalldämpfenden Fluidkanal mit einem Strömungsleitelement gemäß dem Oberbegriff des Anspruches 1.

Klimaanlagen für Kraftfahrzeuge weisen üblicherweise ein mehrteiliges, spritzgegossenes Gehäuse auf, das mit Luftkanälen verbunden ist, über welche die temperierte Luft dem Fahrzeuginnenraum zuführbar ist. Zur Vermeidung einer zu starken Geräuschentwicklung, die durch die durchströmende Luft oder von außerhalb des Gehäuseteils liegenden Schallquellen hervorgerufen und insbesondere an großwandigen Gehäuseteilen verstärkt wird, werden diese großflächigen Bereiche solcher Gehäuseteile mit einer Schaumstoffauflage versehen. Diese Schaumstoffauflage lässt sich in der Regel auf das Gehäuse nur nachträglich, d. h. nach Fertigstellung des Gehäuses, aufbringen, was jedoch aufwändig ist.

Aus der DE 36 39 138 C2 ist ein Gehäuse für eine Heizungs- oder Klimaanlage eines Kraftfahrzeugs bekannt, das mit Schaumstoff versehende Wandbereiche aufweist, welche aus einem schaumstoffummantelten Stützgerippe bestehen, wobei die Schaumstoffschicht nachträglich am Gehäuse anspritzbar ist.

Ferner ist aus der DE 197 22 866 A1 ein Luftführungskanal einer Heizungs- oder Klimaanlage eines Kraftfahrzeugs bekannt, mit einer einem Gebläse zugeordneten Eingangsöffnung und einer Ausgangsöffnung, die dem weiteren Komponenten der Heizungs- oder Klimaanlage enthaltenden Gehäuse zugeordnet ist, wobei der Luftführungskanal mindestens eine Krümmung aufweist, so dass maximal nur zwischen einem kleinen Teilbereich der Eingangsöffnung und einem kleinen Teilbereich der Ausgangsöffnung eine lineare Verbindung möglich ist. Die Kanalwandung kann zumindest innenseitig mit schalldämpfendem Material ausgekleidet sein.

Die DE 20 2006 014 683 offenbart einen verblockten Fluidkanal, jedoch keine wellenförmige Umlenkung, sondern eine Einschnürung.

Aus der EP 1 630 486 A2 ist ferner eine Klappenanordnung mit einer um eine Drehachse verschwenkbaren Klappe bekannt, welche eine leicht S-förmig gekrümmte Oberfläche aufweist, wobei die Klappe einen steifen Klappengrundkörper hat, auf dessen Oberflächen ein geschäumtes Material vorgesehen ist, welches jedoch die Schmalseiten des Klappengrundkörpers freilässt. Das Vorsehen des geschäumten Materials an den Oberflächen dient hierbei dem Toleranzausgleich zum Luftkanal.

Die WO 03/073016 A1 offenbart ein verschwenkbares, in Gestalt einer einflügligen Klappe ausgebildetes Dämpfungselement in einem Luftkanal, wobei das Dämpfungselement um eine Achse verschwenkbar ist, welche parallel zur Längsachse des Luftkanals verläuft. Der Luftkanal ist hierbei mit schallabsorbierenden Materialien unterschiedlicher Dichte ausgekleidet. Das Dämpfungselement ist ebenfalls mit absorbierendem Material verkleidet.

Ferner sind zur Optimierung eines Strömungsverlaufs starr in einem Luftkanal angeordnete Strömungsleitelemente bekannt.

Ebenfalls sind zur Regelung eines Fluidstroms Klappen oder Schieber bekannt, welche im Fluidkanal verschwenkbar oder verschiebbar angeordnet sind.

Derartige Ausgestaltungen lassen noch Wünsche offen.

Es ist Aufgabe der Erfindung, einen schalldämpfenden Fluidkanal mit einem Strömungsleitelement zur Verfügung zu stellen, der in seiner Funktion verbessert ist.

Diese Aufgabe wird gelöst durch einen schalldämpfenden Fluidkanal mit einem Strömungsleitelement mit den Merkmalen des Anspruchs 1. Vorteilhafte Ausgestaltungen sind Gegenstand der Unteransprüche.

Die Erfindung betrifft einen schalldämpfenden Fluidkanal mit einer Eintrittsöffnung aufweisend einen Eintrittsquerschnitt, einer Austrittsöffnung aufweisend einen Austrittsquerschnitt und mindestens einem im Fluidkanal zwischen dem Eintrittsquerschnitt und dem Austrittsquerschnitt angeordneten, schalldämpfenden Strömungsleitelement, wobei der Strömungsweg des Fluidkanals zwischen dem Eintrittsquerschnitt und dem Austrittsquerschnitt in mindestens einem Betriebszustand im Bereich des Strömungsleitelements vollständig versperrt ist, so dass das Fluid am Durchströmen gehindert ist. Das Strömungsleitelement ist hierbei derart im Fluidkanal angeordnet, dass es den Fluidstrom in zwei Teilströme unterteilt. Das Strömungsleitelement weist vorzugsweise einen profilierten Querschnitt mit mindestens einer gekrümmt in Strömungsrichtung verlaufenden Fläche auf. Das Strömungsleitelement kann hierbei beispielsweise kreisförmig, oval, elliptisch oder stromlinienförmig ausgebildet sein, besonders bevorzugt sind jedoch asymmetrische Querschnitte, insbesondere bevorzugt ist ein tropfentragflügelförmiger Querschnitt oder der Querschnitt ist stromlinienförmig profiliert. Durch eine Integration der Funktionen Schallabsorbierung und Versperrung kann der Bauraumbedarf verringert werden, insbesondere kann eine zusätzliche Klappe ganz entfallen.

Bevorzugt ist das Strömungsleitelement durch schallabsorbierendes Material gebildet oder zumindest teilweise von schallabsorbierendem Material umgeben. Eine entsprechende Ausgestaltung unterstützt das Verhindern einer direkten Durchschallung des Fluidkanals. Hierbei ist am Strömungsleitelement oder der Wand des Fluidkanals keine geräuscherzeugende Anschlagkante erforderlich. Ferner ist eine Minimierung von Pfeif- und Zischgeräuschen im nahezu geschlossenen Zustand des Strömungsleitelements möglich.

Vorzugsweise ist in zumindest einem Bereich, welcher durch schallabsorbierendes Material gebildet ist, eine Dämmwand angeordnet. Die Dämmwand kann im Strömungsleitelement ausgebildet sein, wobei sie auch tragende Funktionen für das schallabsorbierende Material übernehmen kann.

Das Strömungsleitelement ist innerhalb des Fluidkanals bewegbar. Hierbei dient das Strömungsleitelement, ggf. mit anderen Elementen, im versperrten Zustand des Fluidkanals als Sperre. Dabei kann der Fluidstrom durch den Fluidkanal vollständig gesperrt oder in einen anderen Fluidkanal umgeleitet sein. Besonders bevorzugt schneidet oder berührt auch im vollständig geöffneten Zustand jede gerade Verbindung zwischen der Eintrittsöffnung zum erweiterten Bereich und der Austrittsöffnung aus dem erweiterten Bereich das Strömungsleitelement oder eines der Strömungsleitelemente, so dass eine direkte Durchschallung verhindert ist.

Für eine ausreichende Behinderung einer direkten Durchschallung des Fluidkanals ist es jedoch ausreichend, wenn die Projektion des Strömungsleitelements auf die Eintrittsöffnung der Bedingung genügt:

$$0,75 \; FE \; x < FS < 1,25 \; X \; FE$$

wobei FE die Fläche des Eintrittsquerschnitts und FS die Fläche der Projektion des Strömungsleitelements ist.

Bevorzugt entspricht die Summe der Flächen der Projektionen der Teilfluidkanäle auf die Eintrittsöffnung der Fläche der Eintrittsöffnung, jedoch kann die Summe der Flächen der Projektionen der Teilfluidkanäle FT in Einzelfällen auch der Bedingung 0,9 x FE < FT oder ggf. sogar 0,75 x FE < FT für eine ausreichende Funktion des Strömungsleitelements genügen.

Besonders bevorzugt ist das Strömungsleitelement quer zur normalen Strömungsrichtung des Fluids verschiebbar, um das Strömungsprofil zu beeinflussen. Hierbei ist das Strömungsleitelement bevorzugt um 1/4 x FT verschiebbar ausgebildet, wobei FT die Summe der Flächen der Projektionen der Teilfluidkanäle ist.

Ggf. auch in Verbindung mit einer linearen Verschiebbarkeit ist das Strömungsleitelement um eine Drehachse im Fluidkanal verschwenkbar ausgebildet.

Hierbei ist das Strömungsleitelement besonders bevorzugt derart ausgebildet, dass es in einer Stellung den Fluidkanal vollständig verschließt.

Durch ein Verschwenken des Strömungsleitelements kann die Temperatur- und Luftverteilung am Austrittsquerschnitt oder beispielsweise zwischen verschiedenen Auslässen einer Klimaanlage variiert werden.

Das Strömungsleitelement kann auch mehrteilig, insbesondere bevorzugt zweiteilig, ausgebildet sein, wobei zwei Teile des Strömungsleitelements relativ zueinander verschwenkbar sind. Durch ein Aufklappen kann der Fluidkanal vollständig durch das Strömungsleitelement verschlossen werden. Insbesondere bevorzugt sind die beiden Teile des Strömungsleitelements in entgegengesetzte Richtung verschwenkbar. Bei der Ausführung des Strömungsleitelements als teilbare Klappe ergibt sich ein homogeneres Geschwindigkeitsprofil hinter dem Strömungsleitelement im Vergleich zu einer herkömmlichen Klappe.

In den Fluidkanal kann in Ergänzung eine Leitung einführbar sein, über welche das Fluid oder ein Teilstrom des Fluids in einen anderen Fluidkanal überführbar ist.

Besonders bevorzugt ist ein Fluidkanal vorgesehen, mit einer Wand, die zumindest bereichsweise mit schallabsorbierendem Material umgeben oder aus schallabsorbierendem Material gebildet ist, und/oder die zumindest bereichsweise durch ein schalltransparentes Material gebildet ist. Der Fluidkanal weist einen gekrümmten Verlauf auf, so dass nur zwischen einem Teilbereich der Eingangsöffnung und einem kleinen Teilbereich der Ausgangsöffnung eine lineare Verbindung möglich ist. Hierbei ist im Fluidkanal mindestens ein Strömungsleitelement vorgesehen, welches den Fluidkanal in zwei Teilfluidkanäle unterteilt und zumindest mit einem Teilbereich in dem Bereich des Fluidkanals angeordnet ist, in welchem eine ansonsten lineare Verbindung zwischen der Eingangsöffnung und der Ausgangsöffnung möglich ist. Ferner können weitere Verblockungen in Wellenform vorgesehen sein. Das Strömungsleitelement in Verbindung mit der Ausgestaltung des Fluidkanals, d.h. dessen Wandverlaufs, kann eine direkte Durchschallung des Fluidkanals auf relativ einfache Weise verhindern.

Durch die Verwendung eines Strömungsleitelements kann zudem das Geschwindigkeitsprofil trotz einer Umlenkung, insbesondere bevorzugt einer wellenartigen Umlenkung, homogenisiert werden, so dass das Strömungsleitelement neben der Schalldämpfungsfunktion eine Strömungsprofil-Vergleichmäßigungsfunktion aufweist. Hierbei wird der Fluidkanal durch das Strömungsleitelement in zwei Teilfluidkanäle unterteilt, welche gemäß einer besonders bevorzugten Ausgestaltung jeweils einen Düsenbereich und einen Diffusorbereich aufweisen. Durch die geeignete Ausgestaltung der Düsen- und Diffusorbereiche kann durch besagte Homogenisierung der Geschwindigkeitsverteilung am Austrittsquerschnitt auch die (maximale) Strömungsgeschwindigkeit verringert werden, wodurch sich der Gesamtdruckverlust der Klimaanlage verringert. Ebenso wird die Geräuschentwicklung an den Austrittsquerschnitten reduziert

Der Fluidkanal ist derart ausgebildet, dass er eine Verblockung in Wellenform aufweist. Hierbei sind gemäß einer bevorzugten Ausgestaltung, der Eintrittsquerschnitt vor der Verblockung und der Austrittsquerschnitt nach der Verblockung miteinander fluchtend angeordnet.

Das Strömungsleitelement kann auch einen Sensor aufnehmen, z.B. Temperatursensor, der beispielsweise im Außenbereich auf einer quer zum Fluidkanal verlaufenden harten Rippe montiert ist, wobei der elektrische Anschluss über die Drehachse des Dämpfungselements nach außen verlegt ist. Weiterhin ist es möglich, das Strömungsleitelement mit einem Beduftungssystem oder einem System zur Verbesserung der Luftgüte auszustatten.

Beim Fluidkanal handelt es sich vorzugsweise um den Luftkanal, über welchen der Mitteldüse eines Fahrzeuginnenraums Luft in denselben zugeführt wird. Entsprechende Ausgestaltungen sind jedoch auch für beliebige andere Fluidkanäle möglich, also bspw. für einen Luftkanal zum Fondbereich oder zu den Seitendüsen. Die "Welle" im Fluidkanal erhöht zwar leicht den erforderlichen Bauraum, verbessert aber die aerodynamische Funktion des Fluidkanales und verhindert oder verringert die Weiterleitung von Geräuschen, wie beispielsweise Gebläse- oder Strömungsgeräusche aus dem Inneren des Klimaanlagengehäuses.

Eine besonders bevorzugte Anwendungsform eines derartigen Luftkanals ist die Verwendung als Schalldämpfer, jedoch sind auch andere Anwendungen möglich.

Vorteilhaft ist, dass im Strömungsleitelement ein Sensor angeordnet ist.

Vorteilhaft ist, dass im Strömungsleitelement ein Beduftungssystem oder ein System zur Verbesserung der Luftgüte angeordnet ist.

Im Folgenden wird die Erfindung anhand mehrerer Ausführungsbeispiele mit Varianten, teilweise unter Bezugnahme auf die Zeichnung, im Einzelnen erläutert. Es zeigen:

Fig. 1 einen Längsschnitt durch einen Luftkanal gemäß dem ersten Ausführungsbeispiel,

Fig. 2 einen Längsschnitt durch einen Luftkanal gemäß dem zweiten Ausführungsbeispiel,

Fig. 3 einen Längsschnitt durch einen Luftkanal gemäß dem dritten Ausführungsbeispiel mit durch Pfeile angedeutetem Strömungsprofil am Luftein- und -austritt, und

Fig. 4 eine Fig. 3 entsprechende Darstellung zur Verdeutlichung der Abmessungen, auf welche Bezug genommen wird.

Fig. 5 einen Längsschnitt durch einen nicht erfindungsgemäßen Luftkanal in geöffneter Schieberstellung,

Fig. 6 einen Längsschnitt durch den Luftkanal von Fig. 5 in geschlossener Schieberstellung,

Fig. 7 einen Längsschnitt durch einen nicht erfindungsgemäßen Luftkanal in geöffneter Stellung,

Fig. 8 einen Längsschnitt durch den Luftkanal von Fig. 7 in teilweise geschlossener Stellung,

Fig. 9 einen Längsschnitt durch den Luftkanal von Fig. 7 in geschlossener Stellung,

Fig. 10 einen Längsschnitt durch einen nicht erfindungsgemäßen Luftkanal in geöffneter Stellung,

Fig. 11 einen Längsschnitt durch den Luftkanal von Fig. 10 in geschlossener Stellung,

Fig. 12 einen Längsschnitt durch einen nicht erfindungsgemäßen Luftkanal in geöffneter Stellung,

Fig. 13 einen Längsschnitt durch den Luftkanal von Fig. 12 in teilweise geschlossener Stellung,

Fig. 14 einen Längsschnitt durch den Luftkanal von Fig. 12 in geschlossener Stellung, und

Fig. 15 einen Längsschnitt durch einen Luftkanal gemäß dem vierten Ausführungsbeispiel mit Darstellung des Strömungsleitelements in geöffneter und geschlossener Stellung.

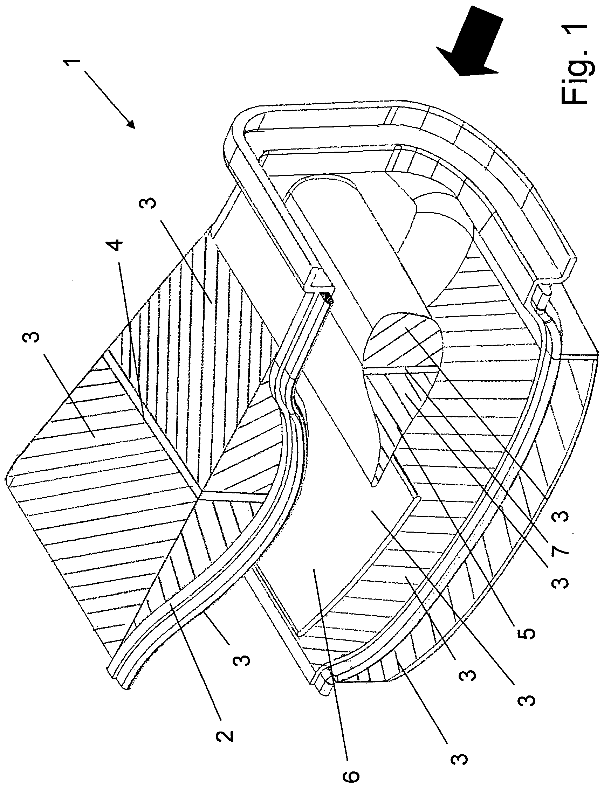

Fig. 1 zeigt einen Längsschnitt durch einen Fluidkanal, vorliegend einen Luftkanal 1, der mit einem Klimaanlagengehäuse (nicht dargestellt) verbunden ist, und über den temperierte Luft dem Fahrzeuginnenraum zuführbar ist. Der Pfeil zeigt hierbei die Strömungsrichtung der Luft an. Der Luftkanal 1 wird vorliegend durch eine Wand 2 gebildet, welche aus einem Kunststoffmaterial spritzgegossen ist.

Der Luftkanal 1 weist im dargestellten Bereich eine leichte Richtungs- und Querschnittsveränderung auf, wobei im in Fig. 1 oben dargestellten Bereich die Wand 2 wellenartig ausgebildet ist (vorliegend ist ein Wellental vorgesehen) und von außen mit Elementen aus schallabsorbierenden Material 3, vorliegend einem akustischen Schaum, versehen ist. Zwei benachbarte Elemente sind vorliegend durch eine Dämmwand 4 getrennt. Die Elemente sind vorliegend derart geformt, dass die Welle der Wand 2 aufgefüllt ist, so dass sich unter Einbeziehung der Dämmwand 4 eine Art Ebene ergibt. Zur akustischen Anbindung der Wand 2 an die Elemente aus schallabsorbierenden Material 3 ist die Wand 2 zumindest in Teilbereichen unterbrochen, so dass sie dort nur noch als Kraft aufnehmende Rippenstruktur ausgebildet ist.

In dem in Fig. 1 unten dargestellten Bereich, in welchem die Wand 2 nach außen gekrümmt ist, ist dagegen ein Element aus schallabsorbierendem Material 3 angebracht, welches eine im Wesentlichen konstante Dicke aufweist.

Auch auf der Innenseite der Wände 2 sind dünn ausgebildete Elemente aus schallabsorbierendem Material 3 aufgebracht, wobei die Elemente vorliegend aus dem gleichen Material gefertigt sind.

Im Innenraum des Luftkanals 1 sind ferner zwei unterschiedliche Strömungsleitelemente 5 und 6 angeordnet, wobei das erste Strömungsleitelement 5 einen stromlinienförmig profilierten Querschnitt und das zweite Strömungsleitelement 6 einen leicht entsprechend dem Luftkanalverlauf gekrümmten Verlauf mit konstanter Dicke auf. Das erste Strömungsleitelement 5 weist eine Dämmwand 7, welche als tragende Struktur dient, auf, welche eine konstante Dicke hat und in ihrer Erstreckung im Wesentlichen senkrecht zur Wand 2 des Luftkanals 1 angeordnet ist. Alternativ ist auch eine Ausrichtung der Dämmwand in Längsrichtung des Strömungsleitelements möglich.

An der Dämmwand 7 sind zwei profilierte Elemente aus schallabsorbierendem Material 3 angebracht, so dass sich insgesamt die besagte stromlinienförmige Gestalt des ersten Strömungsleitelements 5 ergibt.

Das erste Strömungsleitelement 5 ist vorliegend etwas nach oben versetzt im Luftkanal 1 angeordnet, wobei es um eine Drehachse verschwenkbar ist, so dass es bei einer um ca. 90° gedrehten Stellung den Luftkanal 1 vollständig verschließt, wobei die von einander entferntesten Bereiche des Luftleitelements 5 vorliegend an der Wand 2 des Luftkanals 1 dicht anliegen. Die Dichtfunktion wird durch die Elastizität des schallabsorbierenden Materials 3 des Strömungsleitelements 5 sowie des schallabsorbierenden Materials 3 der Wand 2 unterstützt. Hierbei ist das schallabsorbierende Material 3 derart an der Dämmwand 7 angebracht, dass das schallabsorbierende Material 3 in Richtung parallel zur Drehachse leicht überstehend ausgebildet ist, wodurch ein seitliches Vorbeiströmen von Luft am Strömungsleitelement 5 verhindert wird. Bei einer Bewegung reiben die Enden des schallabsorbierenden Materials 3 an der Wand 2, was im Wesentlichen geräuschfrei erfolgt. Eine ähnliche Abdichtung kann an den Seitenwänden senkrecht zur Drehachse erfolgen, wobei hier alternativ auch Anschlagkanten verwendet werden können.

Das zweite Strömungsleitelement 6 ist etwas nach unten versetzt im Luftkanal 1 angeordnet, wobei es - in Luftströmungsrichtung gesehen - kurz nach dem Ende des ersten Strömungsleitelements 5 anfängt. Das zweite Strömungsleitelement 6 ist vorliegend vollständig von einer dünnen Schicht aus schallabsorbierendem Material 3 umgeben.

Insgesamt ergeben sich so im Normalbetrieb, d.h. bei maximalem Strömungsquerschnitt, ein Ein- und ein Austrittsquerschnitt, die auf Grund der Einbauten (erstes und zweites Strömungsleitelement) nicht auf direktem Wege mit einer linearen Verbindung miteinander verbindbar sind.

Vorliegend erfolgt die Anordnung der Elemente aus schallabsorbierendem Material 3 derart, dass keine direkte Durchschallung des Luftkanals 1 möglich ist, d.h. die Elemente sind nicht nur um den Luftkanal 1 herum sondern insbesondere auch im Weg der Schallausbreitung, d.h. der linearen Verbindung zwischen Eintrittsquerschnitt und Austrittsquerschnitt angeordnet (z.B. in Gestalt der Strömungsleitelemente 5, 6 und der Welle).

Auf Grund ihrer Funktion wird auf den nach unten in den Strömungsweg ragenden Bereich auch als Verblockung Bezug genommen.

Gemäß einer nicht in der Zeichnung dargestellten Variante des ersten Ausführungsbeispiels ist die Wand in Richtung Innenraum des Luftkanals perforiert ausgebildet. Das schallabsorbierende Material wird von außen her auf diese Wand gelegt, so dass die Wand durchschallt werden kann und ein teil des Schalls nach außen abgegeben und somit nicht in Strömungsrichtung der Luft weitergeleitet wird.

Die Wand kann auch rahmenartig ausgebildet und zumindest in ihren offenen Bereichen durch schallabsorbierendes Material ausgefüllt sein.

Gemäß einer weiteren Variante ist zur perforierten Wand mit schallabsorbierendem Material eine zweite durchgehend ausgebildete Wand vorgesehen, welche das schallabsorbierende Material von außen her abgedeckt, so dass das schallabsorbierende Material zwischen zwei Wänden angeordnet ist, wovon die innere Wand gut schalldurchlässig ausgebildet ist. In diesem Fall wird eine Durchschallung des schallabsorbierenden Materials verhindert und zudem eine Einstreuung von Schallquellen aus der Umgebung des Luftkanals verhindert.

Das im Folgenden beschriebene, zweite Ausführungsbeispiel unterscheidet sich vom ersten Ausführungsbeispiel nur in der Ausgestaltung der Wand 2 des Luftkanals 1, so dass für gleiche oder gleichwirkende Elemente im Folgenden dieselben Bezugzeichen verwendet werden. Auch in diesem Fall ist das erste Strömungsleitelement 5 um eine Drehachse verschwenkbar, so dass es den Luftkanal 1 vollständig verschließen kann.

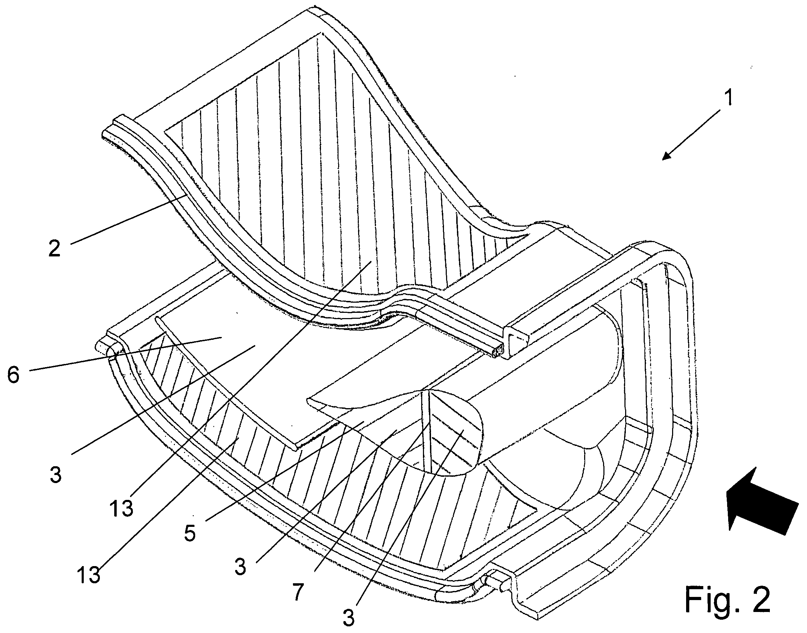

Die Wand 2 des Luftkanals 1 wird vorliegend in den in Fig. 2 schraffiert dargestellten Bereichen, also in den Bereichen auf der Krümmungsinnen- und -außenseite des Luftkanals 1, die gemäß dem ersten Ausführungsbeispiel von innen und außen her mit schallabsorbierendem Material 3 bedeckt sind, durch ein schalltransparentes Material 13 gebildet. Als schallabsorbierendes und teilweise schalltransparentes Material dient vorliegend ein Vlies mit einer Materialdicke von ca. (1 bis 3 mm) +/- 1 mm. Gemäß dem zweiten Ausführungsbeispiel entfällt ferner die Dämmwand 4, welche gemäß dem ersten Ausführungsbeispiel auf der Außenseite des Luftkanals 1 ausgebildet und zwischen zwei Elementen aus schallabsorbierendem Material angeordnet ist.

Zweck des zweiten Strömungsleitelements 6 bei in beiden vorstehend beschriebenen Ausführungsbeispielen ist eine vollständige Verblockung des Strömungsquerschnitts, welche vorliegend nicht ausschließlich durch das erste Strömungsleitelement 5 möglich ist.

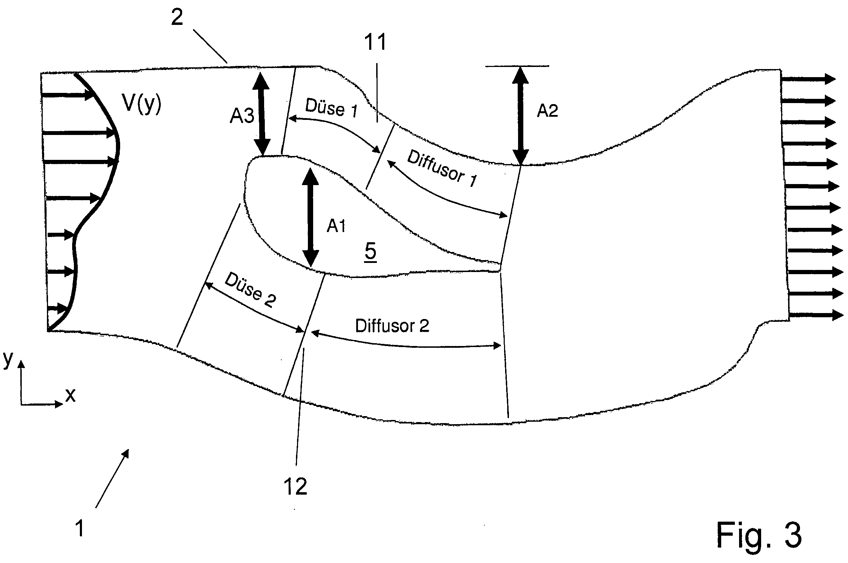

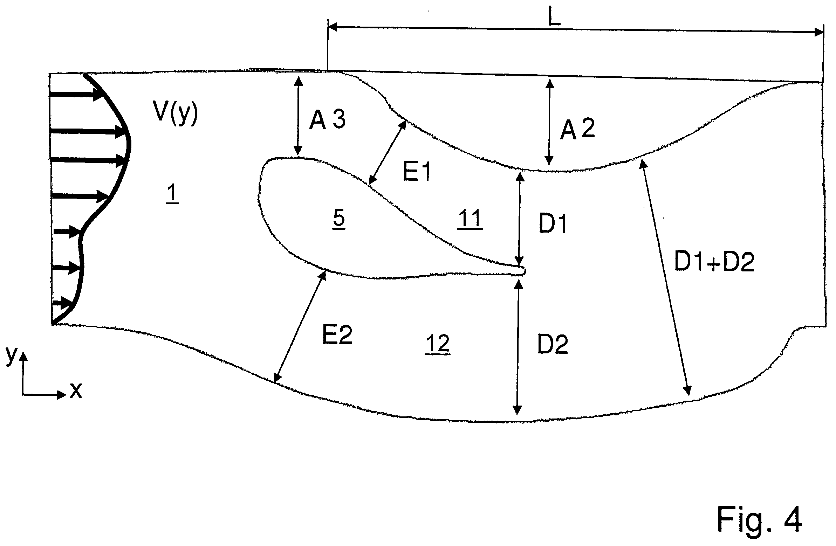

Gemäß dem dritten, in Fig. 3 und 4 dargestellten Ausführungsbeispiel ist lediglich ein einziges Strömungsleitelement im Luftkanal 1 angeordnet, welches in seiner Gestalt und seinem Aufbau, auch wenn nicht explizit dargestellt, im Wesentlichen dem ersten Strömungsleitelement 5 der vorigen Ausführungsbeispiele entspricht, weshalb dieses Strömungsleitelement ebenfalls mit dem Bezugszeichen 5 versehen ist. Auch dieses Strömungsleitelement 5 ist um eine Drehachse verschwenkbar im Luftkanal 1 angeordnet, so dass es den freien Strömungsquerschnitt vollständig verschließen kann.

Auch der Luftkanal 1 gemäß dem dritten Ausführungsbeispiel weist eine wellenartige Umlenkung auf. Die Umlenkung weist eine Länge L auf, wobei die maximale Tiefe der Verblockung A2 vorliegend auch dem Abstand des Strömungsleitelements 5 von der entsprechenden Wand 2 entspricht (siehe Fig. 4). Die genaue Position des Strömungsleitelements 5 und die maximale Tiefe der Verblockung A2 ergibt sich aus den Eintrittsrandbedingungen, d.h. aus V(y). Im vorliegenden Fall ist die Eintrittsgeschwindigkeit in y-Richtung im oben dargestellten Bereich höher als im unten dargestellten Bereich.

Die Höhe des Strömungsleitelements 5 ist auch mit A1 bezeichnet. Die Eintrittshöhe in den auf der Seite der Verblockung angeordneten, ersten Teilluftkanal 11 ist in der Zeichnung mit A3 bezeichnet. Durch das Strömungsleitelement 5 ergibt sich in beiden anströmseitigen Teilluftkanälen 11 bzw. 12 eine Düsenfunktion (in Fig. 3 bezeichnet mit Düse 1 bzw. Düse 2) und in den ausströmseitigen Teilluftkanälen eine Diffusorfunktion (in Fig. 3 bezeichnet mit Diffusor 1 bzw. Diffusor 2), wobei der engste Querschnitt der Düse 1 mit E1, der engste Querschnitt der Düse 2 mit E2, der Austritt aus dem Diffusor 1 mit D1 und der Austritt aus dem Diffusor 2 mit D2 bezeichnet sind. Der Querschnitt in Strömungsrichtung nach dem Strömungsleitelement 5 bleibt im Wesentlichen konstant, wie in Fig. 4 mit D1+D2 angedeutet. Ferner sei darauf hingewiesen, dass der engste Querschnitt der Düse jeweils dem Eintritt in den entsprechenden Diffusor entspricht.

Folgende Verhältnisse haben sich als vorteilhaft herausgestellt:

$$A2 / L = 0,10 \text{ bis } 2,$$

Insbesondere für den Schalldämpfer gemäß dem vorliegenden Ausführungsbeispiel sind Verhältnisse für A2/L von 0,15 bis 0,35, und ganz besonders bevorzugt 0,15 bis 0,3 geeignet.

Die Tiefe der Verblockung A2 ist abhängig von der Geschwindigkeit V(y), d.h. vom Eintrittsprofil. Bevorzugt ist die Eintrittshöhe in den ersten Teilluftkanal 11 kleinergleich der Höhe der Verblockung, d.h. es gilt bevorzugt:

$$A3 <= A2.$$

Ferner sind folgende Verhältnisse für den dargestellten Schalldämpfer geeignet:

$$E1 / A3 = 0,70 \text{ bis } 0,95$$

$$E1 / D1 = 0,65 \text{ bis } 0,95$$

und

$$E2 / D2 = 0,65 \text{ bis } 0,95$$

Allgemein sind die folgenden Verhältnisse sinnvoll:

$$E1 / A3 = 0,30 \text{ bis } 0,95$$

$$E1 / D1 = 0,40 \text{ bis } 0,95$$

und

$$E2 / D2 = 0,40 \text{ bis } 0,95$$

Um die Luftverteilung bis zum Kanalaustritt zu vergleichmäßigen, wird beim vorliegenden Eintrittsströmungsprofil die Strömung im Teilluftkanal 11 etwas stärker gedrosselt als im Teilkanal 12, indem E1 kleiner ausgeführt wird als E2. Somit ist das Verhältnis E1/E2, in erster Linie, abhängig von V(y). Durch eine Abmessungswahl entsprechend den vorstehenden Angaben, ergibt sich vorliegend ein sehr gutes Strömungsprofil verbunden mit einer geringen Schalldurchlässigkeit in Strömungsrichtung der Luft.

In sämtlichen zuvor beschriebenen Ausführungsbeispielen kann der Fluid- oder Luftkanal 1 als Einsatz ausgebildet sein, welcher an Stelle eines herkömmlichen Bereichs in das Fluidkanalsystem, beispielsweise einer Fahrzeug-Klimaanlage, eingesetzt werden kann. Die Anbringung derartiger Fluid- oder Luftkanäle in einem Luftkanalsystem erfolgt vorzugsweise mit geeigneten, formschlüssigen Befestigung zwischen den Bauteilen, wobei akustisch wirksame Materialien vorgesehen sind, die eine störungsfreie Überströmung der Fügestellen ermöglichen.

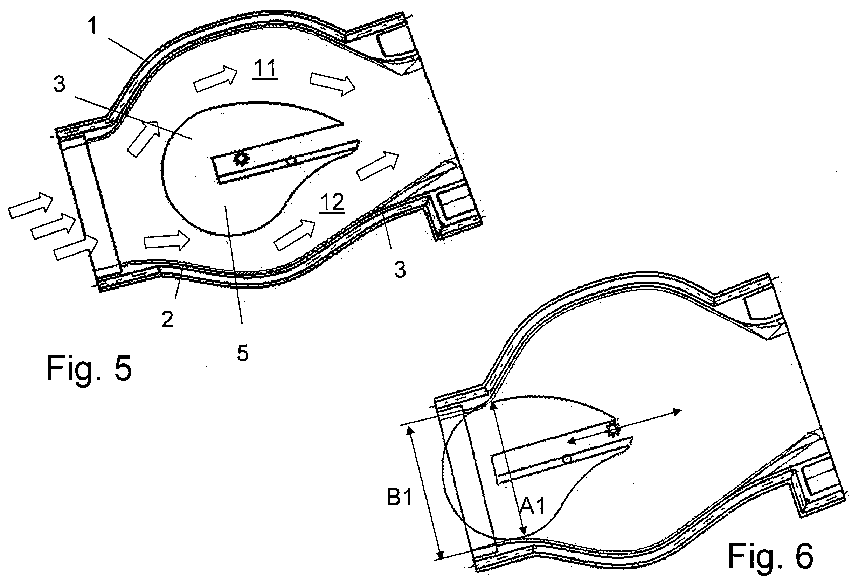

Im Folgenden wird unter Bezugnahme auf die Figuren 5 und 6 ein nicht erfindungsgemäßes Beispiel näher erläutert. Figuren 5 und 6 zeigt einen Längsschnitt durch einen vorliegend getrennt ausgebildeten Abschnitt eines Luftkanals 1, der mit einem Klimaanlagengehäuse (nicht dargestellt) verbunden ist, und über den temperierte Luft dem Fahrzeuginnenraum zuführbar ist. Die Pfeile in Fig. 5 zeigen hierbei die Strömungsrichtung der Luft an. Der Luftkanal 1 wird vorliegend durch eine Wand 2 gebildet, deren Struktur aus einem Kunststoffmaterial spritzgegossen ist. Die Wand 2 oder zumindest große Bereiche der Wand 2, wie auch die Oberfläche des Strömungsleitelements 5 sind durch schallabsorbierendes Material gebildet. Das Strömungsleitelement kann alternativ auch vollständig oder in Teilen durch schallabsorbierendes Material gebildet sein.

Das Strömungsleitelement 5 ist in einer Erweiterung des Luftkanals 1 angeordnet, wobei es den Luftkanal 1 in zwei Teilluftkanäle 11, 12 unterteilt. Das Strömungsleitelement 5 ist tropfenförmig, mit asymmetrischer tragflügelförmiger Gestalt ausgebildet. Es ist mittels einer Verstellvorrichtung in Längsrichtung des Luftkanals 1 verschiebbar, vorliegend mittels eines Zahnrads und einer Zahnstange, die im Inneren des Strömungsleitelements 5 angeordnet sind, wie in der Zeichnung schematisch angedeutet, so dass es im Bereich mit seinem maximalen Querschnitt (Höhe A1) den Eintrittsquerschnitt (Höhe B1) des Luftkanals 1 vollständig versperren kann (siehe Fig. 6).

Bei in Längsrichtung verschiebbaren Strömungsleitelementen 5 mit Luftregelfunktion gilt, dass die maximale Höhe A1 des Strömungsleitelements 5 größer oder gleich der minimalen Höhe B1 des Luftkanals 1 im Eintrittsquerschnitt (oder gemäß einer nicht in der Zeichnung dargestellten Variante des vierten Ausführungsbeispiel bei einer Verschiebbarkeit zum Verschließen des Luftkanals 1 in Richtung Luftaustritt der minimalen Höhe des Luftkanals 1 im Austrittsquerschnitt) ist.

Das Strömungsleitelement 5 hat neben der Luftregelfunktion auch die Funktion der Strömungsvergleichmäßigung, d.h. ein ungleichmäßiges Strömungsprofil am Eintrittsquerschnitt wird durch die unterschiedlichen Strömungswege um das Strömungsleitelement 5 vergleichmäßigt. Bei entsprechender Anströmung kann jedoch auch ein spiegelbildlich ausgebildetes Strömungsleitelement verwendet werden.

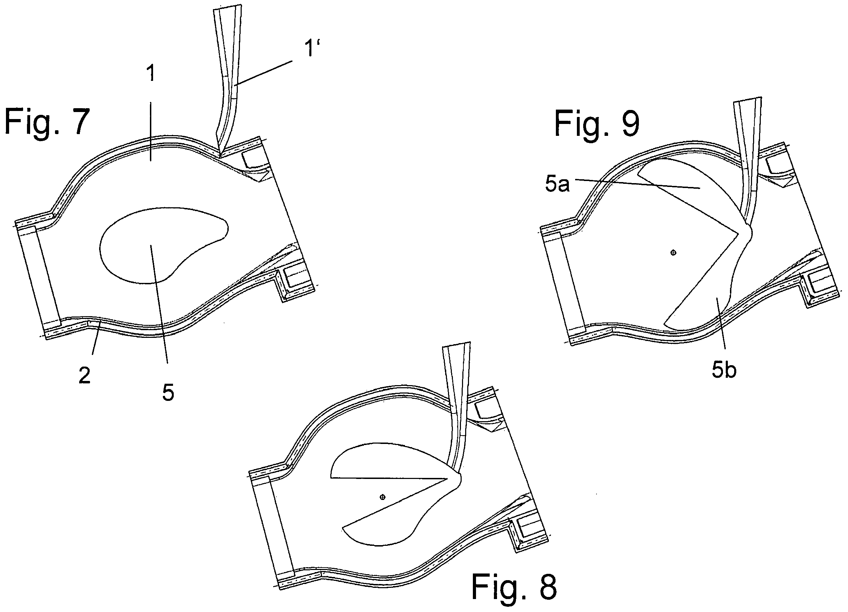

In den Figuren 7 bis 9 ist ein nicht erfindungsgemäßes Beispiel eines Luftkanals 1 dargestellt, wobei die Form des Luftkanals 1 sowie die Form des Strömungsleitelements 5 denjenigen des vierten Ausführungsbeispiels entsprechen, jedoch unterscheidet sich die Funktion - abgesehen von der Anordnung und der Schalldämpffunktion im Normalbetrieb, die in Fig. 7 dargestellt ist - wesentlich von der des zuvor beschriebenen Beispiels.

Das Strömungsleitelement 5 ist vorliegend durch zwei Teile 5a und 5b gebildet, wobei die Unterteilung entlang der Mittellängsachse des Luftkanals 1 verläuft. Die beiden Teile 5a und 5b sind luftabströmseitig mittels eines Scharniers miteinander verbunden, welches auch die Schwenkachse der Teile 5a und 5b definiert. Ausgehend vom aneinander anliegenden Zustand, der in Fig. 7 dargestellt ist, schwenken die beiden Teile 5a und 5b jeweils nach außen in Richtung Wand 2 des Luftkanals 1 weg, bis sie, wie in Fig. 9 dargestellt, in ihrer anderen Endstellung in Anlage an die Wand 2 gelangen. In der in Fig. 9 dargestellten Anordnung wird die Austrittsseite des Luftkanals 1 vollständig abgesperrt.

Gemäß dem Beispiel dient jedoch das Strömungsleitelement 5 zusätzlich der Luftverteilung, wobei über eine schnorchelartige Leitung 1', welche von außen her in den Luftkanal 1 einführbar ist, Luft aus dem keilförmigen Bereich luftanströmseitig des ganz oder teilweise geöffneten Strömungsleitelements 5 aus dem Luftkanal 1 abgeführt werden kann. Die Einführöffnung für die schnorchelartige Leitung 1' in der Wand 2 des Luftkanals 1 ist im Normalbetrieb, d.h. bei einer reinen Durchströmung des Luftkanals 1, abgedichtet. Hierbei unterstützt das schallabsorbierende Material 3 der Wand 2 die Dichtfunktion.

Durch die Verwendung der Leitung 1' ergibt sich beispielsweise kurz vor einem Ausströmer, welcher als Komfortdüse mit Spotstrahl und diffusem Luftaustritt ausgebildet ist, eine einfache Möglichkeit, die Luft auf die beiden Luftkanäle (spot/diffus) zu verteilen.

Die schnorchelartige Leitung 1' kann gemäß einer Variante des Beispiels auch ganz entfallen, so dass das Strömungsleitelement 5 lediglich der Durchflussregelung durch den Luftkanal 1 dient. Hierbei unterstützt die Luftströmung das Öffnen des Strömungsleitelements 5.

Gemäß einer zweiten Variante des Beispiels kann wiederum die schnorchelartige Leitung 1' ganz entfallen, so dass das Strömungsleitelement 5 lediglich der Durchflussregelung durch den Luftkanal 1 dient, wobei die Strömungsrichtung von der anderen Seite her erfolgt, d.h. in der Zeichnung von rechts kommend.

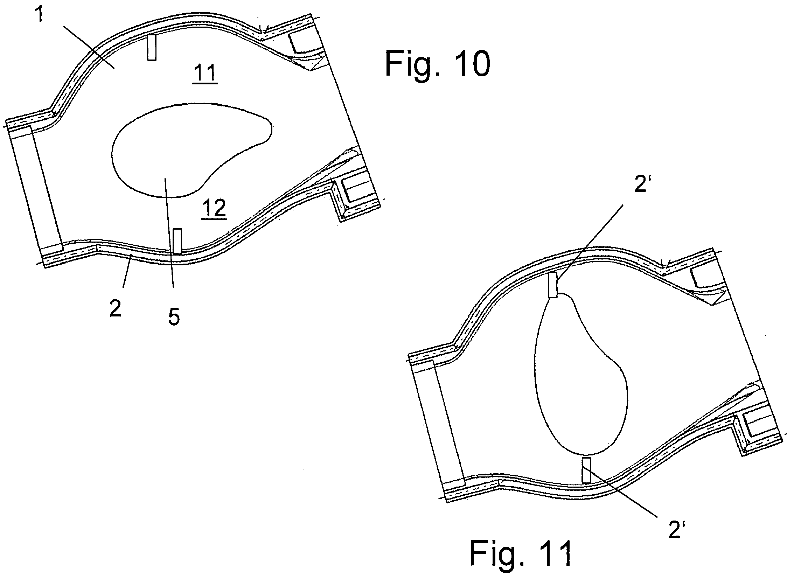

Gemäß einer weiteren Variante des Beispiels kann eine Durchströmung entsprechend der zweiten Variante des fünften Ausführungsbeispiels vorgesehen sein, wobei wiederum eine schnorchelartige Leitung vorgesehen ist, welche in diesem Fall luftanströmseitig des Strömungsleitelements in den Luftkanal einführbar ist. Beim vorstehend beschriebenen fünften Ausführungsbeispiel und dessen Varianten kann die Anordnung der Schwenkachse auch luftanströmseitig vorgesehen sein. Figuren 10 und 11 zeigen einen Längsschnitt durch einen nicht erfindungsgemäßen Luftkanal, wobei im Luftkanal 1 ein Luftleitelement 5 angeordnet ist. Der Querschnitt des Luftkanals 1 sowie der Querschnitt des Luftleitelements entsprechen denjenigen des fünften Ausführungsbeispiels, jedoch unterscheidet sich die Relativbewegung der Luftleitelemente zum Luftkanal voneinander. Das Luftleitelement 5 gemäß dem sechsten Ausführungsbeispiel ist im Luftkanal 1 vorliegend um ca. 90° verdrehbar. In der gedrehten Stellung, die in Fig. 11 angedeutet ist, versperrt das Luftleitelement 5 den Luftkanal 1 vollständig, d.h. es dient als Klappe.

Dahingegen dient es in der geöffneten Stellung von Fig. 10 der Vergleichmäßigung der Strömungsgeschwindigkeit über den Querschnitt.

Im Luftkanal 1 sind, ausgehend von der Wand 2 beidseitig Anschläge 2' vorgesehen, an welchen das vordere und das hintere Ende des Luftleitelements 5 im geschlossenen Zustand anliegen. Je nach Abmessung des Luftleitelements 5 und des Luftkanals 1 können die Anschläge 2' kleiner oder größer ausgebildet sein oder ganz entfallen. Die Anschläge können vorteilhafterweise auch vollständig in das schallabsorbierende Material der Wand eingebettet sein, so dass sie keinen Einfluss auf die Luftströmung durch den Kanal haben.

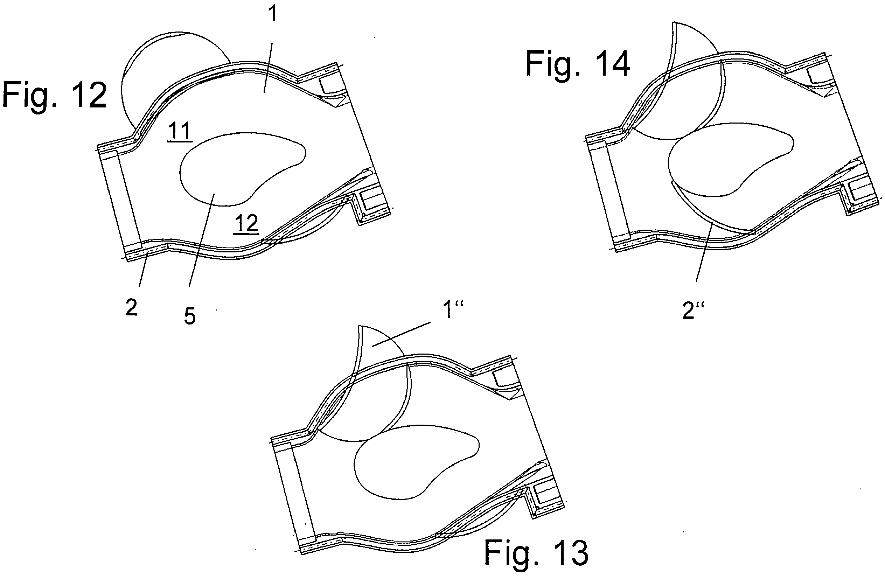

In den Figuren 12 bis 14 ist als nicht erfindungsgemäßes Beispiel ein vorliegend starr im Luftkanal 1 angeordnetes Strömungsleitelement 5 vorgesehen, welches den Luftkanal 1 in zwei Teilluftkanäle 11 und 12 unterteilt. Der Querschnitt des Luftkanals 1 sowie der Querschnitt des Luftleitelements entsprechen denjenigen des Beispiels nach Fig. 7-9. Im Unterschied zu den vorigen Beispielen ist das Luftleitelement 5 starr im Luftkanal 1 angeordnet, jedoch sind im Bereich des Luftleitelements 5 in die Wand 2 des Luftkanals 1 integriert ein Absperrelement 2" sowie ein Ausleitelement 1" angeordnet.

Das Ausleitelement 1" ist derart ausgebildet, dass seine eine Wandfläche im vollständig geöffneten Zustand des Luftkanals 1 einen Teil der Wand 2 des Luftkanals 1 bildet. Eine zweite Wandfläche ist beabstandet von dieser Wandfläche des Ausleitelements 1" vorgesehen, welche im geschlossenen Zustand des Luftkanals 1, also in einem Zustand, in welchem die Luft, welche im Luftkanal 1 strömt, durch das Ausleitelement 1" in einen anderen Luftkanal abgeleitet wird, am Luftleitelement 5 anliegt, so dass die Ausleitöffnung im Teilluftkanal 11 angeordnet ist. Der Strömungsweg durch den zweiten Teilluftkanal 12 ist durch das Absperrelement 2" versperrt, welches entlang einer Kreisbahn von außerhalb des Luftkanals 1 in den Luftkanal 1 eingeschoben wird, bis es mit seinem vorderen Ende in Anlage an das Luftleitelement 5, vorliegend im anströmseitigen Bereich desselben, gelangt.

Durch das Absperrelement 2" lässt sich die Luftverteilung zwischen dem Luftstrom, der durch das Ausleitelement 1" ausgeleitet wird, und dem Luftstrom, der im Luftkanal 1 verbleibt, geregelt.

Gemäß einer Variante des Beispiels ist das Luftleitelement zudem noch derart verdrehbar im Luftkanal angeordnet, so dass es selbst die Absperrfunktion im zweiten Teilluftkanal erfüllen kann, wodurch das Absperrelement entfallen kann. Durch die Anlage des Ausleitelements im kreisförmig ausgebildeten Bereich des Luftleitelements, in welchem zudem mittig die Drehachse angeordnet ist, kann eine dichte Anlage über den gesamten Drehbereich des Luftleitelements ermöglicht werden.

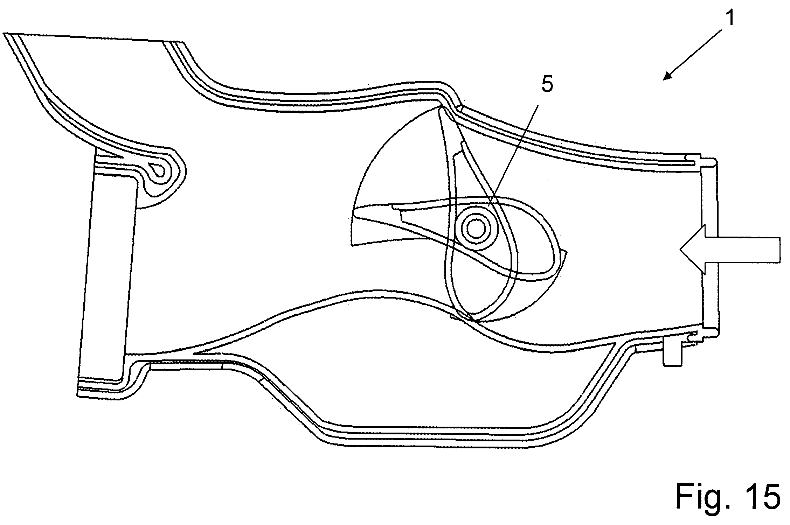

Fig. 15 zeigt ein viertes Ausführungsbeispiel eines Strömungsleitelements 5 in einem Luftkanal 1, wobei in Strömungsrichtung der Luft hinter dem Strömungsleitelement 5 eine Verzweigung des Luftkanals 1 vorgesehen ist. Die abzweigenden Luftkanäle führen die Luft zu unterschiedlichen Austritten im Fahrzeug. Im Unterschied zu den zuvor beschriebenen Beispielen hat das Strömungsleitelement 5 gemäß dem vierten

Ausführungsbeispiel zusätzlich die Aufgabe, die Luft auf die beiden Austritte zu verteilen. Durch eine Stellbewegung, d.h. vorliegend eine Drehbewegung, des Strömungsleitelements 5 wird die Verteilung der Luftmenge auf die beiden Austritte unterschiedlich beeinflusst und insgesamt gedrosselt. Wird das Strömungsleitelement 5 weiter gedreht, dass es den Luftkanal vollständig verschließt, so gelangt keine Luft zu den beiden Austritten. Das Strömungsleitelement 5 ist vorliegend tragflächenförmig ausgebildet und besteht aus einem schallabsorbierenden Material.

Zusätzlich können im Luftkanal weitere akustische Maßnahmen, wie z.B. Oberflächen, Taschen, Einlagen, usw. aus einem schallabsorbierenden Material vorgesehen sein. Ebenso können akustische Fenster aus schallabsorbierendem, teilschalldurchlässigem Material vorgesehen sein.

Anstelle von Anschlägen an den Wänden kann auch das Luftleitelement mit anström- und abströmseitig ausgebildeten Vorsprüngen versehen sein, welche die gleiche Funktion, nämlich ein gutes Abdichten gegenüber der Anlagefläche, erfüllen.

## Patentansprüche

1. Schalldämpfender Fluidkanal mit einer Eintrittsöffnung aufweisend einen Eintrittsquerschnitt (A), einer Austrittsöffnung aufweisend einen Austrittsquerschnitt und mit einer wellenartigen Umlenkung, und mindestens einem im Fluidkanal (1) zwischen dem Eintrittsquerschnitt (A) und dem Austrittsquerschnitt angeordneten, schalldämpfenden und einem um eine Drehachse im Luftkanal (1) verschwenkbaren Strömungsleitelement (5), wobei der Strömungsweg des Fluidkanals (1) zwischen dem Eintrittsquerschnitt (A) und dem Austrittsquerschnitt in mindestens einem Betriebszustand im Bereich des Strömungsleitelements (5) vollständig versperrt ist, so dass das Fluid am Durchströmen gehindert ist, wobei eine Verblockung von einer Seite des Fluidkanals (1) und eine Erweiterung in Richtung der anderen Seite des Fluidkanals (1) vorgesehen ist, wobei der Eintrittsquerschnitt vor der Verblockung und Erweiterung und der Austrittsquerschnitt nach der Verblockung und Erweiterung miteinander fluchtend angeordnet sind.

2. Fluidkanal nach Anspruch 1, **dadurch gekennzeichnet, dass** das Strömungsleitelement (5) zumindest bereichsweise durch ein schallabsorbierendes Material (3) gebildet ist.

3. Fluidkanal nach einem der vorhergehenden Ansprüche, **dadurch gekennzeichnet, dass** das Strömungsleitelement (5) linear verschiebbar ist.

4. Fluidkanal nach einem der vorhergehenden Ansprüche, **dadurch gekennzeichnet, dass** das Strömungsleitelement (5) mehrteilig ausgebildet ist, wobei mindestens zwei Teile des Strömungsleitelements (5) relativ zueinander verschwenkbar sind.

5. Fluidkanal nach Anspruch 4, **dadurch gekennzeichnet, dass** die beiden Teile des Strömungsleitelements (5) in entgegengesetzte Richtung verschwenkbar sind.

6. Fluidkanal nach Anspruch 4 oder 5, **dadurch gekennzeichnet, dass** in den Fluidkanal (1) eine Leitung eingeführt ist, über welche das Fluid oder ein Teilstrom des Fluids in einen anderen Fluidkanal überführt ist.

7. Fluidkanal nach einem der vorhergehenden Ansprüche, **dadurch gekennzeichnet, dass** zumindest ein Teilkanal (11, 12) um das Strömungsleitelement (5) einen als Düse ausgebildeten Eintrittsbereich und einen als Diffusor ausgebildeten Austrittsbereich aufweist.

8. Fluidkanal nach einem der vorhergehenden Ansprüche , **dadurch gekennzeichnet, dass** die Tiefe der Verblockung (A2) im Verhältnis zur Länge der Verblockung (L) im Bereich von 0,15 bis 0,35 liegt.

9. Fluidkanal nach einem der vorhergehenden Ansprüche, **dadurch gekennzeichnet, dass** das Strömungsleitelement (5) den Fluidkanal (1) in zwei Teilfluidkanäle (11, 12) aufteilt, wobei die Geometrie der Teilfluidkanäle (11 und 12) dadurch bestimmt ist, dass der engste Querschnitt (E1) des ersten Teilfluidkanals (11), der benachbart der Verblockung verläuft, im Verhältnis zur Eintrittshöhe (A3) des Teilfluidkanals (11) im Bereich von 0,30 bis 0,95 liegt, das Verhältnis des engsten Querschnitts (E1) des ersten Teilfluidkanals (11) zum Austritt aus dem ersten Teilfluidkanal (11) im Bereich 0,65 bis 0,95 liegt, und das Verhältnis des engsten Querschnitts (E2) des zweiten Teilfluidkanals (12) zum Austritt aus dem zweiten Teilfluidkanal (12) im Bereich 0,65 bis 0,95 liegt.

10. Fluidkanal nach einem der vorhergehenden Ansprüche, **dadurch gekennzeichnet, dass** der Fluidkanal (1) einen zweiten Austrittsquerschnitt aufweist, wobei die Fluidverteilung auf die Austrittsquerschnitte durch das Strömungsleitelement (5) regelbar ist.

11. Fluidkanal nach einem der vorhergehenden Ansprüche, **dadurch gekennzeichnet, dass** im Strömungsleitelement (5) ein Sensor angeordnet ist.

12. Fluidkanal nach einem der vorhergehenden Ansprüche, **dadurch gekennzeichnet, dass** im Strömungsleitelement (5) ein Beduftungssystem oder ein System zur Verbesserung der Luftgüte angeordnet ist.

## Claims

1. A sound-absorbing fluid channel with an inlet opening having an inlet cross-section (A), an outlet opening having an outlet cross-section and with a wavy deflection, and at least one sound-absorbing flow guidance element (5) disposed in the fluid channel (1) between the inlet cross-section (A) and the outlet cross-section and pivotable around an axis of rotation in the air channel (1), wherein the flow path of the fluid channel (1) between the inlet cross-section (A) and the outlet cross-section is completely blocked in at least one operating status in the area of the flow guidance element (5), so that the fluid is prevented from flowing through, wherein a blocking from one side of the fluid channel (1) and an extension in the direction of the other side of the fluid channel (1) is provided, wherein the inlet cross-section before the blocking and extension and the outlet cross-section after the blocking and extension are aligned with one another.

2. The fluid channel of claim 1, **characterised in that** the flow guidance element (5) is at least partially formed by a sound-absorbing material (3).

3. The fluid channel of any preceding claim, **characterised in that** the flow guidance element (5) is linearly displaceable.

4. The fluid channel of any preceding claim, **characterised in that** the flow guidance element (5) is of multipart design, wherein at least two parts of the flow guidance element (5) are pivotable relative to one another.

5. The fluid channel of claim 4, **characterised in that** the two parts of the flow guidance element (5) are pivotable in the opposite direction.

6. The fluid channel of claim 4 or 5, **characterised in that** a conduit is introduced into the fluid channel (1), through which the fluid or a partial flow of the fluid is transported into another fluid channel.

7. The fluid channel of any preceding claim, **characterised in that** at least a channel section (11, 12) has an inlet area formed as a nozzle and an outlet area formed as a diffuser around the flow guidance element (5).

8. The fluid channel of any preceding claim, **characterised in that** the depth of the blocking (A2) is in the range from 0.15 to 0.35 in relation to the length of the blocking (L).

9. The fluid channel of any preceding claim, **characterised in that** the flow guidance element (5) separates the fluid channel (1) into two fluid channel sections (11, 12), wherein the geometry of the fluid channel sections (11 and 12) is **characterised in that** the tightest cross-section (E1) of the first fluid channel section (11), which runs adjacent to the blocking, is in the range from 0.30 to 0.95 in relation to the inlet height (A3) of the fluid channel section (11), the relation of the tightest cross-section (E1) of the first fluid channel section (11) to the outlet from the first fluid channel section (11) is in the range from 0.65 to 0.95, and the relation of the tightest cross-section (E2) of the second fluid channel section (12) to the outlet from the second fluid channel section (12) is in the range from 0.65 to 0.95.

10. The fluid channel of any preceding claim, **characterised in that** the fluid channel (1) has a second outlet cross-section, wherein the fluid distribution across the outlet cross-sections can be regulated with the flow guidance element (5).

11. The fluid channel of any preceding claim, **characterised in that** a sensor is arranged in the flow guidance element (5).

12. The fluid channel of any preceding claim, **characterised in that** a fragrance system or a system for improving the air quality is arranged in the flow guidance element (5).

**Revendications**

1. Conduit de fluide amortissant le bruit, comprenant une ouverture d'entrée présentant une section d'entrée (A), comprenant une ouverture de sortie présentant une section de sortie, et comprenant une chicane de retour de flux, de forme ondulée, et comprenant au moins un élément déflecteur d'écoulement (5) amortissant le bruit et disposé, dans le conduit de fluide (1), entre la section d'entrée (A) et la section de sortie, et comprenant un élément déflecteur d'écoulement pouvant pivoter autour d'un axe de rotation dans le conduit d'air (1), où le trajet de l'écoulement du conduit de fluide (1), entre la section d'entrée (A) et la section de sortie, est complètement bloqué dans la zone de l'élément déflecteur d'écoulement (5), dans au moins un état de fonctionnement, de sorte que cela empêche le fluide de s'écouler, où il est prévu une obturation d'un côté du conduit de fluide (1) et un élargissement en direction de l'autre côté du conduit de fluide (1), où la section d'entrée en amont de l'obturation et de l'élargissement, et la section de sortie en aval de l'obturation et de l'élargissement, sont disposées en étant alignées l'une par rapport à l'autre.

2. Conduit de fluide selon la revendication 1, **caractérisé en ce que** l'élément déflecteur d'écoulement (5) est formé au moins partiellement par un matériau (3) absorbant le bruit.

3. Conduit de fluide selon l'une ou l'autre des revendications précédentes, **caractérisé en ce que** l'élément déflecteur d'écoulement (5) peut être déplacé de façon linéaire.

4. Conduit de fluide selon l'une quelconque des revendications précédentes, **caractérisé en ce que** l'élément déflecteur d'écoulement (5) est conçu en plusieurs parties, où au moins deux parties de l'élément déflecteur d'écoulement (5) peuvent pivoter l'une par rapport à l'autre.

5. Conduit de fluide selon la revendication 4, **caractérisé en ce que** les deux parties de l'élément déflecteur d'écoulement (5) peuvent pivoter en sens opposé.

6. Conduit de fluide selon la revendication 4 ou 5, **caractérisé en ce qu'**une conduite est introduite dans le conduit de fluide (1), conduite par laquelle le fluide ou un flux partiel du fluide est transféré dans un autre conduit de fluide.

7. Conduit de fluide selon l'une quelconque des revendications précédentes, **caractérisé en ce qu'**au moins un conduit partiel (11, 12) présente, autour de l'élément déflecteur d'écoulement (5), une zone d'entrée configurée comme une buse et une zone de sortie configurée comme un diffuseur.

8. Conduit de fluide selon l'une quelconque des revendications précédentes, **caractérisé en ce que** la profondeur de l'obturation (A2), dans le rapport relativement à la longueur de l'obturation (L), se situe dans la plage comprise entre 0,15 et 0,35.

9. Conduit de fluide selon l'une quelconque des revendications précédentes, **caractérisé en ce que** l'élément déflecteur d'écoulement (5) divise le conduit de fluide (1) en deux conduits de fluide partiels (11, 12), où la géométrie des conduits de fluide partiels (11 et 12) est déterminée, par le fait que la section (E1) la plus étroite du premier conduit de fluide partiel (11), qui s'étend à proximité de l'obturation, se situe, dans le rapport relativement à la hauteur d'entrée (A3) du conduit de fluide partiel (11), dans la plage comprise entre 0,30 et 0,95, le rapport de la section (E1) la plus étroite du premier conduit de fluide partiel (11), relativement à la sortie du premier conduit de fluide partiel (11), se situant dans la plage comprise entre 0,65 et 0,95, et le rapport de la section (E2) la plus étroite du second conduit de fluide partiel (12), relativement à la sortie du second conduit de fluide partiel (12), se situe dans la plage comprise entre 0,65 et 0,95.

10. Conduit de fluide selon l'une quelconque des revendications précédentes, **caractérisé en ce que** le conduit de fluide (1) présente une seconde section de sortie, où la répartition de fluide sur les sections de sortie est réglable grâce à l'élément déflecteur d'écoulement (5).

11. Conduit de fluide selon l'une quelconque des revendications précédentes, **caractérisé en ce qu'**un capteur est disposé dans l'élément déflecteur d'écoulement (5).

12. Conduit de fluide selon l'une quelconque des revendications précédentes, **caractérisé en ce qu'**un système de diffusion de parfum ou un système servant à l'amélioration de la qualité de l'air est disposé dans l'élément déflecteur d'écoulement (5).

Fig. 1

Fig. 2

Fig. 3

Fig. 4

Fig. 5

Fig. 6

Fig. 7

Fig. 9

Fig. 8

1'

1

2

5

5a

5b

EP 2 237 979 B1

Fig. 10

Fig. 11

Fig. 12

Fig. 14

Fig. 13

1

11

12

2   5

1"

2"

EP 2 237 979 B1

19

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3639138 C2
- DE 19722866 A1
- DE 202006014683
- EP 1630486 A2
- WO 03073016 A1